# EUROPEAN PATENT SPECIFICATION

(11) **EP 4 607 547 B1**
(45) Date of publication and mention of the grant of the patent: **11.11.2026**
(21) Application number: 25188913.5
(22) Date of filing: 27.04.2021
(51) Int. Cl.: B01D 27/08, B01D 25/00, B01D 27/00, B01D 35/06, B01D 35/30, H01F 7/02

(54) **FILTER INTERCONNECT USING A MAGNETIC SHEAR FORCE**
FILTERVERBINDUNG UNTER VERWENDUNG EINER MAGNETISCHEN SCHERKRAFT
INTERCONNEXION DE FILTRE UTILISANT UNE FORCE DE CISAILLEMENT MAGNÉTIQUE

(30) Priority: 27.04.2020 US 202063015840 P
(43) Date of publication of application: 27.08.2025
(62) Document number(s) of the earlier application(s) in accordance with Art. 76 EPC: 21795919.6 / 4 096 803
(73) Proprietor: KX Technologies LLC, West Haven, CT 06516 (US)
(72) Inventor: ASTLE, Robert, Middlefield 06455 (US); HARTMANN, Matthew, W., Evansville 47715 (US)
(74) Representative: Marks & Clerk LLP

(56) References cited:
- KR-A- 20000 074 968
- US-A1- 2020 001 211
- US-B2- 10 603 612

## Description

### Background Of The Invention

### 1. Field of the Invention

The present invention relates to the interconnection schemes between a filter cartridge and its corresponding manifold whereby, in general, a magnetic shear force is introduced to remove a blocking mechanism that would otherwise prohibit attachment. The magnetic shear force may also be employed to activate or deactivate a switch or valve, or engage or disengage an engagement mechanism relative to other components upon interconnection.

### 2. Description of Related Art

Correlated magnet designs were introduced in U.S. Patent 7,800,471 issued to Correlated Magnetics Research, LLC on September 21, 2010, titled "FIELD EMISSION SYSTEM AND METHOD" (the "'471 Patent"). This patent describes field emission structures having electric or magnetic field sources. The magnitudes, polarities, directionality, and positions of the magnetic or electric field sources are configured to have desirable correlation properties, which are in accordance with a predetermined code. The correlation properties correspond to a special force function where spatial forces correspond to relative alignment, separation distance, and a spatial force function.

In U.S. Patent 7,817,006, issued to Cedar Ridge Research LLC on October 19, 2010, titled "APPARATUS AND METHODS RELATING TO PRECISION ATTACHMENTS BETWEEN FIRST AND SECOND COMPONENTS" (a related patent to the '471 Patent), an attachment scheme between first and second components is taught. Generally, a first component includes a first field emission structure and the second component includes a second field emission structure, wherein each field emission structure includes multiple magnetic field emission sources (magnetic array) having positions and polarities relating to a predefined spatial force function that corresponds to a predetermined alignment of the field emission structures. The components are adapted to be attached to each other when the first field emission structure is in proximity of the second field emission structure.

When correlated magnets are brought into alignment with complementary or mirror image counterparts, the various magnetic field emission sources that make up each correlated magnet will align causing a peak spatial attraction force, while a misalignment will cause the various magnetic field emission sources to substantially cancel each other out. The spatial forces (attraction, repulsion) have a magnitude that is a function of the relative alignment of two magnetic field emission structures, the magnetic field strengths, and their various polarities.

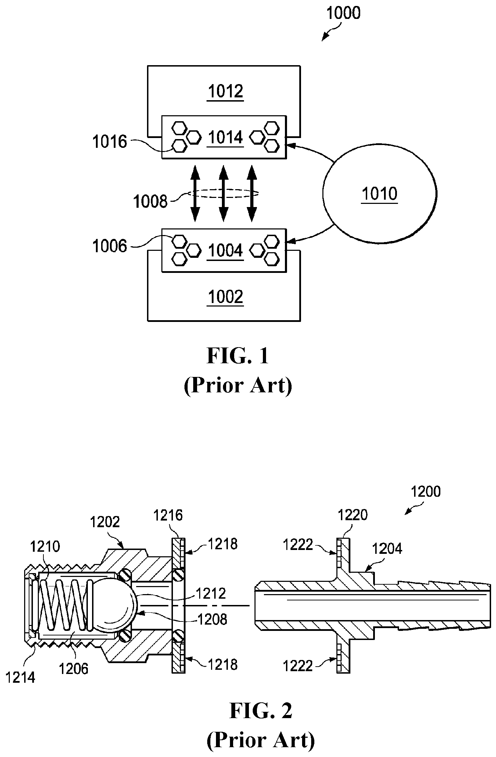

It is possible for the polarity of individual magnet sources can be varied in accordance with a code without requiring a holding mechanism to prevent magnetic forces from "flipping" a magnet. As an illustrious example of this magnetic action, an apparatus 1000 of the prior art is depicted in Fig. 1. Apparatus 1000 includes a first component 1002 and a second component 1012. The first component includes a first field emission structure 1004 comprising multiple field emission sources 1006. The second component includes a second field emission structure 1014 comprising multiple field emission sources 1016. The first and second components are adapted to attach to one another when the first field emission structure 1004 is in proximity of the second field emission structure 1014, that is, they are in a predetermined alignment with respect to one another.

The first field emission structure 1004 may be configured to interact with the second field emission structure 1014 such that the second component 1012 can be aligned to become attached (attracted) to the first component 1002 or misaligned to become removed (repulsed) from the first component. The first component 1002 can be released from the second component 1012 when their respective first and second field emission structures 1004 and 1014 are moved with respect to one another to become misaligned.

Generally, the precision within which two or more field emission structures tend to align increases as the number N of different field emission sources in each field emission structure increases, including for a given surface area A. In other words, alignment precision may be increased by increasing the number N of field emission sources forming two field emission structures. More specifically, alignment precision may be increased by increasing the number N of field emission sources included within a given surface area A.

In U.S. Patent No. 7,893,803 issued to Cedar Ridge Research on February 22, 2011, titled "CORRELATED MAGNETIC COUPLING DEVICE AND METHOD FOR USING THE CORRELATED COUPLING DEVICE," a compressed gas system component coupling device is taught that uses the correlated magnet attachment scheme discussed above.

An illustrious example of this coupling device is shown in Fig. 2, which depicts a quick connect air hose coupling 1200 having a female element 1202 and a male element 1204.

The female element 1202 includes a first magnetic field emission structure 1218. The male element 1204 includes a second magnetic field emission structure 1222. Both magnetic field emission structures are generally planar and are in accordance with the same code but are a mirror image of one another. The operable coupling and sealing of the connector components 1202, 1204 is accomplished with sufficient force to facilitate a substantially airtight seal therebetween.

The removal or separation of the male element 1204 from the female element 1202 is accomplished by separating the attached first and second field emission structures 1218 and 1222. The male element is released when the male element is rotated with respect to the female element, which in turn misaligns the first and second magnetic field emission structures.

A description of the precision alignments of polymagnets can be found at: http://www.polymagnet.com/media/Polymagnet-White-Paper-3-Smart-Magnets-for-Precision-Alignment. pdf.

The present invention adapts the correlated magnet technology described above to an interconnection structure for a filter cartridge and a corresponding manifold. It utilizes the shear force generated by the placement of two correlated magnets against each other, initiating a translation motion perpendicular to the direction of attachment between the magnets. U.S. Patent Publ. No. 2020/0001211 to Li et al. discloses a filtration interconnection scheme including a manifold with a rotatable manifold magnet of correlated magnets, a shroud with alignment tracks, an actuating valve for water ingress, and a filter cartridge having a rotatable filter magnet of correlated magnets, where the manifold magnet and the filter magnet are in magnetic communication with one another when the filter cartridge is inserted with the shroud, and are at least partially rotatably compatible. U.S. Patent No. 10,603,612 to Chandra et al. discloses a filter cartridge comprising an annular collar circumferentially located about a top surface of the housing and having a top rim, an inside wall and an outside wall, wherein the housing top surface comprises a securing lug and a magnetic structure both extending axially from the housing top surface. KR 2000 0074968 discloses a filter cartridge with an annular collar circumferentially located about the filter housing top surface and including securing lugs extending from the annular collar; and iron elements located on or within the annular collar and having a radially outwardly facing surface that extends no further than the annular collar outside wall, wherein the iron elements are attracted by a magnet of the filter manifold.

### Brief Description of the Drawings

The features of the invention believed to be novel and the elements characteristic of the invention are set forth with particularity in the appended claims. The figures are for illustration purposes only and are not drawn to scale. The invention itself, however, both as to organization and method of operation, may best be understood by reference to the detailed description which follows taken in conjunction with the accompanying drawings in which:
Fig. 1 depicts an apparatus of the prior art representing a code without requiring a holding mechanism to prevent magnetic forces from "flipping" a magnet;
Fig. 2 depicts a coupling device of a compressed gas system component that uses a correlated magnet attachment scheme;
Fig. 3 depicts a transparent, perspective view of a filter cartridge - manifold combination using magnetic shear force to remove a block structure that would otherwise prohibit complete rotation;
Fig. 4 depicts a transparent, perspective view of the filter cartridge - manifold housing combination of Fig. 3 when the first magnetic structure is aligned with a second magnetic structure;
Fig. 5A depicts a transparent, perspective view of the final, inserted position of filter cartridge into manifold housing of the embodiment of Fig. 3;
Fig. 5B depicts a perspective view of the final, inserted position of filter cartridge into the manifold housing with a cut-out portion of the manifold showing the internal structure, and a cut-out portion of the second magnetic structure presenting the correlated magnet therein;
Fig. 6 depicts a prospective view of the salient components of a second embodiment of the present invention, depicting the filter cartridge and manifold, which together perform a rotating magnetic shear force for removing a blocking mechanism;
Fig. 7 is a top perspective view of the manifold housing of the embodiment of Fig. 6;
Fig. 8 depicts a bottom perspective view of a locking member of the embodiment of Fig. 6, having a second magnetic structure located on the bottom surface;
Fig. 9 depicts an embodiment of a valve assembly for use with the embodiment of Fig. 6;
Fig. 10 depicts a transparent, perspective view of a fully inserted filter cartridge within the manifold housing of Fig. 6;
Fig. 11 depicts a transparent, perspective view of the locking member configuration of the embodiment of Fig. 6 when acted upon by a magnetic shearing force in a direction radially outwards;
Fig. 12 depicts a transparent, perspective view of filter cartridge of the embodiment of Fig. 6 inserted within, and rotated about, the manifold housing;
Fig. 13 depicts an isometric cross-sectional partial view of a filter cartridge housing top portion having a first magnetic structure and ingress/egress port, and being inserted within a manifold housing receiving portion;
Fig. 14 depicts the filter - manifold combination of Fig. 13 when a valve is in bypass mode, and water flows through a water channel away from, and not directed to, the filter cartridge;
Fig. 15 depicts a cross-sectional view of the filter cartridge - manifold combination of Fig. 13, where the filter cartridge is partially installed and the first and second magnetic structures are in close proximity to one another; and
Fig. 16 depicts a cross-sectional view of the filter cartridge - manifold combination of Fig. 13, where the filter cartridge is completely installed and the first and second magnetic structures are in full magnetic communication in which a maximum shear force is applied between them.

### Description of the Preferred Embodiment(s)

In describing the preferred embodiment of the present invention, reference will be made herein to Figs. 1 - 16 of the drawings in which like numerals refer to like features of the invention.

Correlated magnets contain areas of alternating poles. These codes of alternating poles can concentrate and/or shape magnetic fields to give matching pairs of magnets unique properties. The proposed design specifically uses a complementary correlated magnet pair in a filter cartridge / manifold attachment or interconnect system.

The present invention utilizes correlated magnet designs with "high auto-correlation and low cross-correlation" which is a characteristic of correlated magnets where peak efficacy is achieved (magnet attraction or repulsion) when paired with a specific complementary magnet. An example of such use of correlated magnets is disclosed in U.S. Patent No. 8,314,671 issued to Correlated Magnets Research LLC on November 20, 2012, titled "KEY SYSTEM FOR ENABLING OPERATION OF A DEVICE." Correlated magnets are also characterized by dense and tunable magnetic fields, allowing for specifically engineered force curves with higher force at shorter working distances.

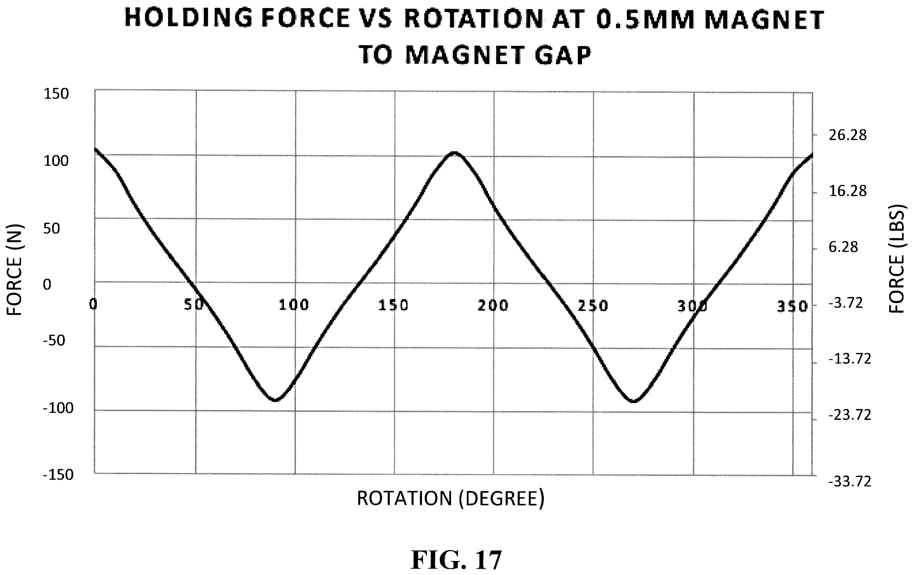

In addition, correlated magnets can be designed to have varying magnetic forces depending on the relative rotational orientation of the pair of magnets (e.g., repulsion-attraction-repulsion-attraction at 90-degree intervals) as illustrated in the Graph of Fig. 17.

Integral to the design is a matching set of "keyed" correlated magnets disposed in/on the filter cartridge housing and manifold, respectively, which provide the initial drive to engage functions through non-electric and non-contacting actuation. As discussed further herein, the embodiments of the present invention illustrate the actuation of a blocking mechanism that allows for the attachment of a filter cartridge to a manifold, and may include the actuation of a valve for water flow when the filter cartridge is secured to the manifold, or the engagement of other mechanisms upon interconnection; however, it should be understood by those skilled in the art that these types of actuations are only examples of how a magnetic shear force mechanism can be implemented, and that other magnetic shear force applications to secure a filter cartridge to a manifold are not precluded.

The present invention utilizes a magnetic design that encompasses correlated magnets. The function of the correlated magnets in this application is twofold. First, a filter cartridge having a correlated magnet is inserted within a receiving manifold having a complementary correlated magnet. The magnets are complementary in the sense that they are designed to work together under magnetic communication to initiate a desired magnetic force. At some point during the interconnection, either during filter cartridge insertion or rotation within the manifold, a desired, predetermined magnetic shear force is generated that causes translation of a movable component or structure having an attached complementary correlated magnet in a direction different from (and in most instances perpendicular to) the direction of rotation or insertion. Second, the magnetic shear force introduced by the rotation or insertion of the filter cartridge acts upon a blocking mechanism, a valve or switch, or an engagement mechanism. In the case of a blocking mechanism, the blocking device is moved, allowing for continued insertion or rotation of the filter cartridge into proper position and initiate water flow, and conversely the blocking device is repositioned under magnetic force back to its initial position during extraction of the filter cartridge.

As noted above, a magnetic shear force is generated by a complementary pair of correlated magnets, and applied to a filter interconnection system, which allows for a higher degree of control and flexibility over the timing, attachment, and actuation of critical components and system functions.

In order to generate a magnetic shear force, the filter cartridge / manifold apparatus introduces a poly magnet or correlated magnet, which can be identified as a first magnetic structure comprising a first set of predefined tracks of magnetic sources magnetically printed into a first magnetizable material which is brought into physical proximity of a second complementary magnetic structure comprising a second set of predefined tracks of magnetic sources magnetically printed into a second magnetizable material.

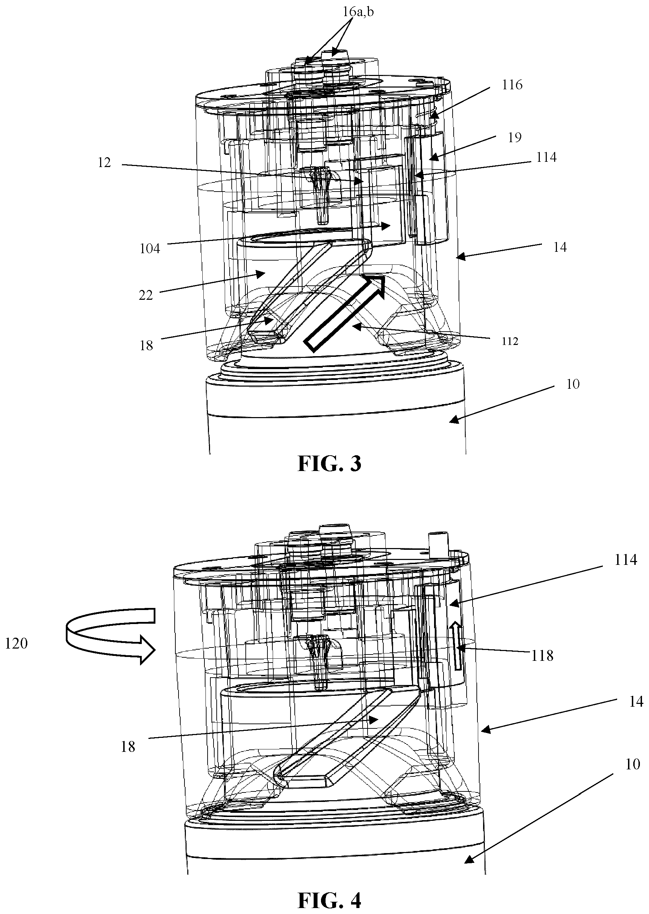

In one embodiment, a magnetic shear force is generated by the rotation of a first magnetic structure mounted on the filter cartridge, which is rotated into close proximity to a second magnetic structure which is in a fixed position on the manifold. Fig. 3 shows one such embodiment of the present invention.

Fig. 3 depicts a transparent, perspective view of a filter cartridge - manifold combination using magnetic shear force to remove a block structure that would otherwise prohibit complete rotation. In this embodiment, filter cartridge 10 includes an annular collar 22 with securing lugs or threads 18 (angled with respect to a center axis of the filter cartridge) and a tab 12 supporting a first magnetic structure. (Although a tab is depicted, other structural members may be used to hold the filter cartridge fixed "first" magnetic structure.)

The filter cartridge is designed to be insertable within manifold 14 having a movable blocking structure 19 which may include or hold a complementary second magnetic structure 114, which in turn may include or hold a magnet 115. Manifold 14 has water ingress and egress ports 16a,b in which the ingress port permits incoming water to be received by the manifold and flow into filter cartridge 10, and the egress port receives filtered water from the filter cartridge. Lugs or threads 18 secure filter cartridge 10 to manifold 14 upon rotation. In an alternate embodiment, a locking mechanism may also be employed to secure further the filter cartridge from reverse rotation.

As depicted in Fig. 3, lugs or threads 18 are shown extending radially outwards from an outside wall of annular collar 22. It is also possible to have receiving apertures and/or receiving threaded grooves on the outside wall of the annular collar 22 to receive lugs or threads on the manifold. Tab 12 is shown extending axially upwards from annular collar 22 and radially outwards at least less than the radial extension of lugs 18, and preferably no further radially outwards than the outside wall of annular collar 22, such that tab 12 does not interfere with the rotation of the filter cartridge within the receiving manifold. It is also possible for tab 12 to be form-fit within the annular collar or on the inside wall of the annular collar and it need not extend axially upwards from the annular collar. The necessary condition for attachment is that there be magnetic communication between the magnet 104 located on the filter cartridge (shown in Fig. 3 within tab 12) and the complementary, movable magnet located on the manifold.

In the embodiment depicted in Fig. 3, filter cartridge 10 is rotated into manifold 14. Lugs or threads 18 include at least a portion of one or more upwardly angled segments, which upon rotation serve to raise the filter cartridge within the manifold as the filter is lifted in the direction of arrow 112 when rotated in the direction of arrow 120 (Fig. 4). A first magnetic structure 104 is secured to the filter cartridge, shown in exemplary embodiment by tab 12, which extends axially upwards from annular collar 22.

During rotation, first magnetic structure 104 comes in close proximity to second magnetic structure 114 supported by manifold 14. Second magnetic structure 114 acts as a blocking member that blocks rotation of filter cartridge 10 by interfering with the path of angled lugs or threads 18 until first magnetic structure 104 is moved into close proximity to second magnetic structure 114. A magnet 115 may be attached to or embedded within second magnetic structure 114. Conversely, magnet 115 may be directly attached to or embedded within blocking member 19.

In the embodiment of Fig. 3, blocking member 19 and second magnetic structure 114 are biased axially downwards by resilient spring 116. Once the magnetic structures are in close proximity, the magnet 115 in the second magnetic structure undergoes a magnetic shear force that overcomes the resilient force provided by spring 116, and the blocking member is moved axially upwards, clearing a path for the topmost portion of lugs 18 to complete the rotation of filter cartridge 10.

Fig. 4 depicts a transparent, perspective view of the filter cartridge - manifold housing combination when the first magnetic structure 104 is aligned with the second magnetic structure 114. As shown, blocking member 19 and second magnetic structure 114 are lifted (from the original position) in the direction of arrow 118, allowing for further rotational motion of the filter cartridge in the direction of arrow 120 because the removal of the blocking member allows the topmost portion of lug 18 to continue follow through on the rotation.

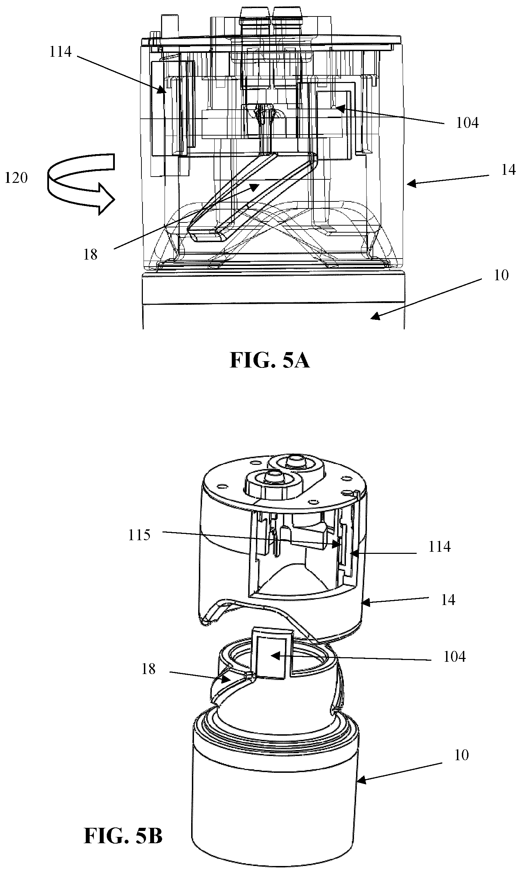

Fig. 5A depicts a transparent, perspective view of the final, inserted position of filter cartridge 10 into manifold housing 14. Filter cartridge 10 is shown rotated past blocking member and second magnetic structure 114 as a result of the axial upwards magnetic shear force shifting the second magnetic structure 114 upwards, and permitting lugs 18 to continue rotation uninhibited. A locking mechanism may be implemented at this point in rotation so that filter cartridge 10 is prohibited from inadvertent release.

Fig. 5B depicts a perspective view of the final, inserted position of filter cartridge 10 into manifold housing 14 with a cut-out portion of the manifold 14 showing the internal structure, and a cut-out portion of the second magnetic structure 114 presenting the correlated magnet 115 therein.

The physical blocking presented by second magnetic structure 114 is removed by the interaction of the two magnetic structures creating an upward shear force, which moves the blocking member against its predisposed resilient downward force.

The physical movement of either magnetic structure may also be used to activate a switch or valve, or otherwise engage an engagement mechanism, capable of initiating another function such as allowing water to flow, activating an electronic signal, or the like. In this manner, the rotation of the filter cartridge causing an axially upwards movement of the second magnetic structure may perform more than the defeating of a blocking mechanism.

In a second embodiment, the interaction of first and second magnetic structures are demonstrated to move a second magnetic structure blocking mechanism in a radial direction away from the center axis so as to allow further rotation of the filter cartridge and/or activate separately or in combination therewith a switch or valve. This configuration is referred to herein as a rotating shear block configuration.

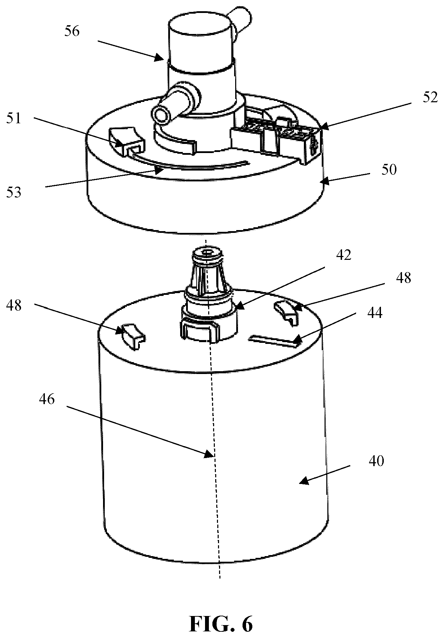

Fig. 6 depicts a prospective view of the salient components of the rotating shear block configuration design - the filter cartridge top portion and manifold head, which together perform a magnetic shear force for removing a blocking mechanism upon rotation.

A depicted in Fig. 6, a filter cartridge 40 includes an axial stem 42 with ingress/egress ports associated therewith and a first magnetic structure 44 located radially outwards from center axis 46. As discussed further below, locking lugs 48 are used to secure filter cartridge 40 to manifold head housing 50. Other locking members may be utilized, and this present embodiment is not limited to the locking members shown in Fig. 6. The function of the locking lugs / members is to secure the filter cartridge to the manifold head so that inadvertent removal is prohibited. Manifold head housing 50 includes receiving apertures 51 and receiving arcuate slots 53 to assist in attachment of filter cartridge 40. Essentially, receiving apertures 51 receive locking lugs 48, and arcuate slots 53 allow the upwards extending, axial portion of locking lugs 48 to traverse around each slot.

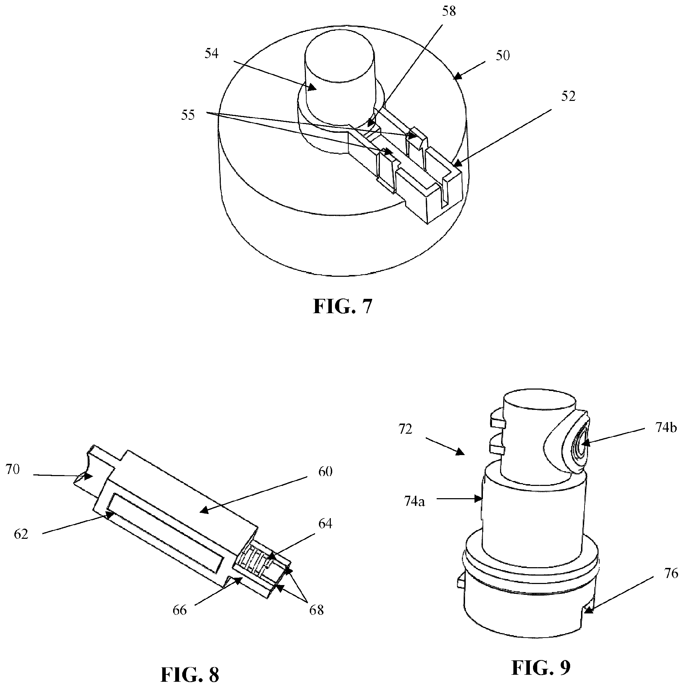

Fig. 7 is a top perspective view of manifold housing 50. Manifold housing 50 is configured with an axial stem 54 which may be used for supporting a valve assembly (not shown). A locking member retention or holder 52 is formed extending radially outwards from axial stem 54. At the junction of axial stem 54 and the radial-most inward portion of locking member retention 52 is an open slot 58. Opposing resilient locking tabs 55 shown with angled faces are configured to receive a movable blocking member 60 in a snap-in fit, securing blocking member 60 within locking member retention 52 while allowing blocking member 60 to translate in directions radially inwards and outwards.

Fig. 8 depicts a bottom perspective view of blocking member 60 having a second magnetic structure 62 located on the bottom surface, either attached thereto or embedded therein. Blocking member 60 is secured within locking member retention 52 on the manifold head housing 50. A resilient member 64, such as a spring, provides a radially inwards force to locking member 60 when locking member 60 is inserted within locking member retention 52. Resilient member 64 acts on an inward wall of the radially outward-most side or face of locking member retention 52, such that without an opposing force, locking member 60 is directed towards slot 58 by resilient member 64.

In the current embodiment, resilient member 64 is supported by slotted protrusion 66, which extends from the body of blocking member 60 in a radially outwards direction when blocking member 60 is placed within locking member retention 52. Protrusion 66 includes parallel slotted apertures 68 for receiving and holding resilient member 64. Other resilient member holders may be utilized without compromising the design configuration. For example, a dowel-shaped protrusion could be used to hold the resilient spring in place, and the present embodiment is not limited to a particular configuration as to how the resilient member can be retained by the blocking member.

On the locking member end opposite protrusion 66 is a locking tab 70. Locking tab 70 is designed to be received by slot 58 when blocking member 60 is acted upon by resilient member 64, and pushed radially inwards towards axial stem 54.

Fig. 9 depicts one embodiment of a valve assembly 72 for the filter cartridge - manifold head configuration depicted in Figs. 7 and 8. Valve assembly 72 includes ingress and egress ports 74a,b and a notch 76 that is configured to allow valve assembly 72 to be supported by axial stem 54 and seat circumferentially on the filter cartridge housing top surface. Notch 74 is designed to be placed over locking retention member 52.

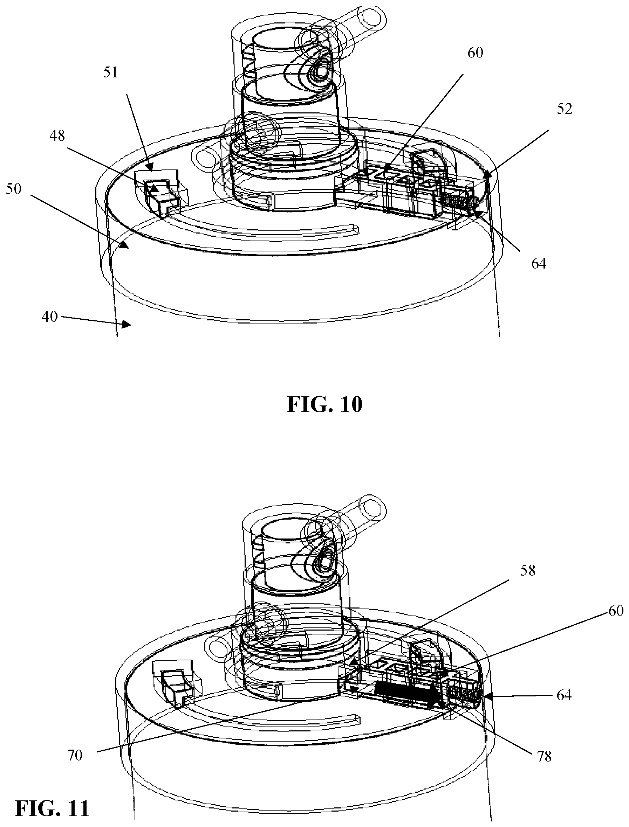

Fig. 10 depicts a transparent, perspective view of a fully inserted filter cartridge 40 within manifold head housing 50. Locking lugs 48 of filter cartridge 40 are inserted within receiving apertures 51. In this position, first and second magnetic structures are aligned so that magnetic communication is initiated. When this occurs, blocking member 60 with second magnetic structure 62 is acted upon by a magnetic shearing force that slides blocking member 60 radially outwards inside locking member retention 52. This action overcomes the radially inwards force of resilient member 64.

Fig. 11 depicts a transparent, perspective view of the blocking member 60 configuration when acted upon by a magnetic shearing force in a direction radially outwards, as denoted by arrow 78. Locking tab 70 is removed from slot 58 in this filter cartridge inserted position.

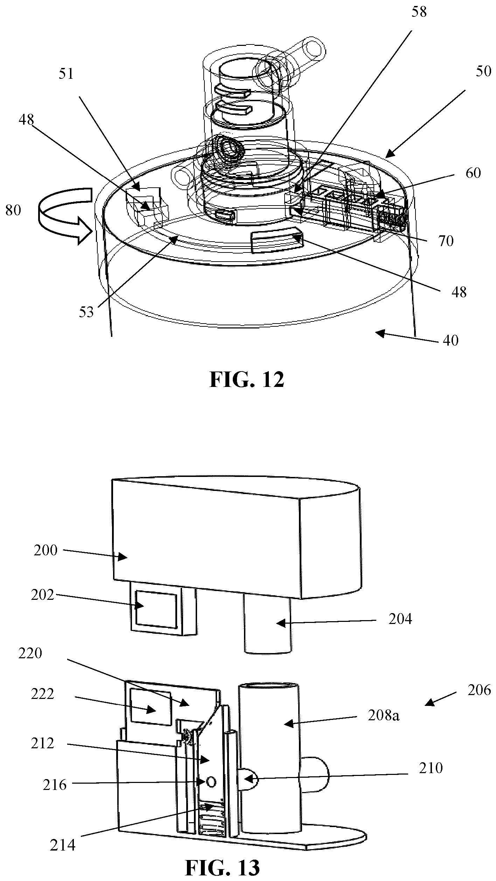

With blocking member 60 sheared radially outwards, filter cartridge 40 is allowed to rotate as shown in the direction of arrow 80 as depicted in Fig. 12.

Fig. 12 depicts a transparent, perspective view of filter cartridge 40 inserted within, and rotated about, manifold head housing 50. While locking tab 70 of blocking member 60 is removed from the manifold slot 58, locking lugs 48 are able to rotate through the arcuate path of slots 53 upon rotation of cartridge 40. At the completion of rotation, the filter cartridge is secured in place, and water flows through valve assembly 72 to and from filter cartridge 40.

Magnetic shear forces may also be utilized in a filter cartridge - manifold configuration specifically to activate or engage a valve. As an exemplary embodiment, Fig. 13 depicts an isometric cross-sectional partial view of a filter cartridge housing top portion 200 having a first magnetic structure 202 and ingress/egress ports (one such port shown here as single cylinder 204), being inserted within manifold housing receiving portion 206.

Manifold housing receiving portion 206 includes a complementary port 208a for that receives cylinder 204 of the filter cartridge. (A complementary port 208b is not shown in Fig. 13.) Port 208a includes a water flow channel 210 connected to bypass valve 212. Bypass valve 212 is biased in the open position by resilient spring 214 to allow water to flow through channel 216 without entering (thus, bypassing) the filter cartridge. In this manner, when a filter cartridge is not installed in the manifold housing, a user will still be able to access water.

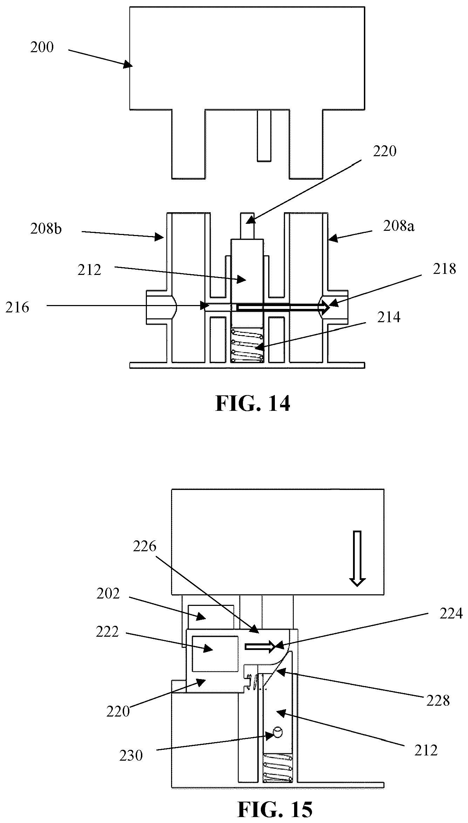

Fig. 14 depicts a cross-sectional view of the filter - manifold combination of Fig. 13 when valve 212 is in bypass mode, and water flows through channel 216 in the direction of arrow 218. At this stage, second magnetic structure 222 held by shear magnet holder 220 is not activated or under any magnetic forces.

Fig. 15 depicts a cross-sectional view of the filter cartridge - manifold combination of Fig. 13, where the filter cartridge is partially installed and the first and second magnetic structures 202, 222 are in close proximity to one another. Shear magnet holder 220 begins to shift perpendicular to the axial direction of the inserted filter cartridge in the direction of arrow 224. An extended, arcuate projection 226 of shear magnet holder 220 interfaces in a camming fashion with angled face 228 on an exposed end of valve 212. As valve 212 is pushed against resilient spring 214, aperture 230, formed in valve 212, shifts away from channel 216, thus closing channel 216 to water flow. Resilient seals may be provided at the interface of valve 212 with channel 216 to seal the path from water leakage.

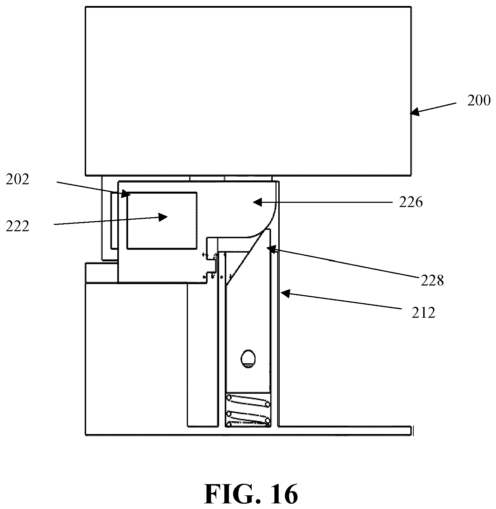

Fig. 16 depicts a cross-sectional view of the filter cartridge - manifold combination of Fig. 13, where the filter cartridge is completely installed and the first and second magnetic structures 202, 222 are in full magnetic communication in which a maximum shear force is applied between them.

Water channel 216 is completely cut-off by valve 212, thus directing water through filter cartridge 200. Shear magnet holder 220 is fully shifted at this point, completing its camming function with angled face 228 of valve 212.

In each embodiment above, two separate, complementary magnetic structures are brought in close proximity to one another to induce a magnetic shearing force, where the force is in a direction different to the initial direction of the approaching magnetic structures (generally in a perpendicular direction). In this manner, interfering blocking structures can be displaced to allow complete interconnection, and valves or switches may be activated to perform various related operational functions.

Generally, the method of operation provides for certain salient steps:
a. Introducing a first component, such as a filter cartridge, having a first magnetic structure, wherein the magnetic structure includes a first set of predefined tracks of magnetic sources magnetically printed into a first magnetizable material;
b. Introducing a second component, such as a receiving manifold, configured to receive the first component, the second component having a complementary second magnetic structure comprising a second set of predefined tracks of magnetic sources magnetically printed into a second magnetizable material;
c. Bringing the first and second components in close proximity to one another by moving them closer together in a first direction, such that the first and second magnetic structures are placed in close proximity, generating a magnetic shear force in a second direction different from, and may be perpendicular to, the first direction;
d. Utilizing the magnetic shear force generated by bringing the first and second magnetic structures in close proximity to one another to displace a blocking component and/or activate a valve or switch; and
   a. Reversing the connection direction to remove the magnetic shear force upon removal and separation of the first component from the second component, thus reintroducing the blocking mechanism, or deactivating the valve or switch.

Thus, having described the invention, what is claimed is:

## Claims

1. A filtration system comprising:
a filter manifold (14) having ingress and egress fluid ports (16a, 16b), and an aperture for receiving a filter cartridge, said filter manifold including a movable blocking mechanism (19) having a magnetic structure (114) therein or secured thereto, said blocking mechanism preventing attachment of said filter cartridge to said manifold and movably responsive in an axial direction (118) to a magnetic field force generated when a complementary or paired magnetic structure (104) is moved in a second direction (120) approximately perpendicular to said axial direction and positioned in close proximity to said magnetic structure (114), said magnetic structures each including a correlated magnet having a plurality of magnetic field emission sources having positions and polarities relating to a predefined spatial force function that corresponds to a predetermined alignment of said magnetic field emission sources; and
said filter cartridge (10), said filter cartridge including:
a housing or sump having a top surface, an axial or longitudinal length, and an internal cavity;
an ingress port and an egress port in fluid communication with said internal cavity and said manifold ingress and egress fluid ports (16a, 16b) when said filter cartridge is connected to said manifold;
an annular collar (22) circumferentially located about said housing top surface, and having a top rim, an inside wall, and an outside wall, said annular collar including:
securing lugs or threads (18) extending from said annular collar; and
a complementary or paired magnetic structure (104) located on or within said annular collar and having a radially outwardly facing surface that extends at least no further than a radial extension of said securing lugs or threads (18);
wherein, upon attachment of said filter cartridge (10) to said filter manifold (14), said magnetic structures (104, 114) are brought together within close proximity to one another such that said magnetic field force is generated, which moves said blocking mechanism in said axial direction, allowing said securing lugs or threads to continue moving in said second direction to complete attachment of said filter cartridge to said filter manifold.

2. The filtration system of claim 1, wherein said filter cartridge annular collar further comprises a tab (12) having a radially outwardly-facing surface and extending in an axial direction with respect to the annular collar above said housing top surface, said complementary or paired magnetic structure (104) located on or within said tab, and optionally, wherein said tab (12) extends in the axial direction from said annular collar top rim and/or said tab (12) radially outwardly facing surface extends no further than said annular collar outside wall.

3. The filtration system of claim 1, wherein said magnetic field emission sources of said magnetic structure (114) of said filter manifold are formed in a predetermined fashion to provide a magnetic shear force when brought in close proximity to said magnetic structure (104) of said filter cartridge.

4. The filtration system of claim 1, wherein said filter cartridge (10) is rotatably received by said filter manifold (14).

5. A method of interconnecting a filter cartridge to a receiving manifold comprising:
introducing said filter cartridge (10) comprising a housing or sump having an internal cavity with filter media and a housing top surface, an ingress and an egress port each in fluid communication with said internal cavity and filter media, an annular collar (22) circumferentially located about said housing top surface and having a top rim, an inside wall, and an outside wall, said annular collar including securing lugs or threads (18) extending from said annular collar, and a magnetic structure (104) located on or within said annular collar (22), wherein said magnetic structure includes a correlated magnet having a plurality of magnetic field emission sources having positions and polarities relating to a predefined spatial force function that corresponds to a predetermined alignment of said magnetic field emission sources;
introducing said receiving manifold (14) configured to receive said filter cartridge, the manifold comprising a blocking mechanism (19) preventing attachment of said filter cartridge to said receiving manifold and having a magnetic structure (114) therein, said blocking mechanism movable in response to a magnetic field force generated when a complementary or paired magnetic structure (104) of said filter cartridge is positioned in close proximity thereto, said magnetic structures (104, 114) each including a correlated magnet having a plurality of magnetic field emission sources having positions and polarities relating to a predefined spatial force function that corresponds to a predetermined alignment of said magnetic field emission sources;
inserting said filter cartridge into a receiving portion of said manifold;
moving said filter cartridge and said manifold in close proximity to one another by moving them closer together in a first direction (120), such that the magnetic structure (104) of the filter cartridge and the magnetic structure (114) of the receiving manifold are placed in close proximity, generating said magnetic field force in an axial direction (118) approximately perpendicular to the first direction (120); and
utilizing said magnetic field force to displace said blocking mechanism (19).

6. The method of claim 5 including reversing said filter cartridge (10) in a direction opposite the first direction (120) to remove the magnetic field force upon removal and separation of the magnetic structure (104) of the filter cartridge from the magnetic structure (114) of the receiving manifold, thus reintroducing the blocking mechanism (19).

7. The method of claim 5 further including continuing moving said filter cartridge (10) in said first direction (120) until said filter cartridge is completely installed in said receiving manifold (14).

8. A filtration system comprising:
a filter cartridge (40) comprising:
a housing or sump having an internal cavity with filter media, and a housing top surface;
an axially centered stem (42) extending from said top surface having an ingress and egress port in fluid communication with said internal cavity filter media;
attachment lugs (48) positioned on or extending from said housing top surface; and
a magnetic structure (44) located on or in close proximity to said top surface, wherein said magnetic structure includes a first correlated magnet; and
a filter manifold (50) configured to receive said filter cartridge (40), said filter manifold comprising:
a manifold housing having a manifold housing top surface, a receiving aperture for receiving said filter cartridge (40), and including an axially centered protrusion (54) having a slot or aperture extending from said manifold housing top surface;
opposing arcuate slots (53) through said manifold housing top surface, each arcuate slot having a larger opening at one end for receiving said attachment lugs (48) of said filter cartridge (40);
a locking member retention structure or holder (52) extending radially outwards from said axially center protrusion (54);
a locking member (60) having a bottom surface and an extended protrusion (70) at one end, said locking member insertable within, and in slidable communication with, said locking member retention structure or holder (52), said locking member including a resilient component (64) on an end opposite said extended protrusion (70) to provide a resilient force against said locking member, pushing said locking member radially inwards towards said slot of said axially centered protrusion; and
a complementary or paired correlated magnet (62) located on said bottom surface of said locking member (60).

9. The filtration system of claim 8 further including a valve assembly (72) having a base and received by said axially centered protrusion (54) and optionally, wherein said valve assembly (72) includes ingress and egress ports (74a, 74b), and a notch (76) in said base, said notch configured to be placed over said locking member retention (52) when said valve assembly is situated on said axially centered protrusion (54).

10. The filtration system of claim 8 wherein said locking member extended protrusion (70) is slidably removed from said slot by a magnetic field force, and against a resilient axially inwards force of said resilient component (64), when said filter cartridge (40) is inserted with said filter manifold (50), allowing said filter cartridge to rotate with respect to said manifold housing.

11. The filtration system of claim 8 wherein said correlated magnet of said filter cartridge includes magnetic field emission sources formed in a predetermined fashion to provide a magnetic shear force when brought in close proximity to said correlated magnet of said filter manifold.

12. A method of interconnecting a filter cartridge to a receiving manifold comprising:
introducing said filter cartridge (40) comprising a housing or sump having an internal cavity with filter media therein, and a top surface, an axially centered stem (42) extending from said top surface having an ingress and egress port in fluid communication with said internal cavity, attachment lugs (48) positioned on or extending from said housing, and a magnetic structure (44) located on or in close proximity to said top surface, wherein said magnetic structure includes a correlated magnet having a plurality of magnetic field emission sources having positions and polarities relating to a predefined spatial force function that corresponds to a predetermined alignment of said magnetic field emission sources;
introducing said receiving manifold (50) configured to receive said filter cartridge (40), said manifold comprising an axially centered protrusion (54) extending axially from said top surface having a slot or aperture therein, opposing arcuate slots (53) through a top surface of said manifold, each arcuate slot having a larger opening at one end for receiving said attachment lugs (48) of said filter cartridge (40), a locking member retention structure or holder (52) extending radially outwards from said axially centered protrusion, a locking member (60) having a bottom surface and an extended protrusion (70), said locking member including a resilient component (64) on an end opposite said extended protrusion (70) to provide a resilient force against said locking member, pushing said locking member radially inwards towards said slot of said axially centered protrusion (54), said locking member insertable within, and in slidable communication with, said locking member retention structure or holder (52); and a complementary or paired correlated magnet (62) located on or within said bottom surface of said locking member;
inserting said filter cartridge (40) into a receiving portion of said manifold (50) by receiving said opposing attachment lugs (48) of said filter cartridge in said arcuate slots (53);
moving said filter cartridge (40) and said manifold (50) in close proximity to one another by moving them closer together in a first direction, such that the magnetic structures (44, 62) of the filter cartridge and manifold are placed in close proximity, generating a magnetic field force therebetween in a second direction perpendicular to the first direction;
utilizing said magnetic field force to displace said locking member (60) in said second direction; and
continuing moving said filter cartridge (40) in said first direction until said filter cartridge is completely installed in said manifold (50).

13. The method of claim 12 wherein said first direction is a rotational direction about said manifold axially centered protrusion (54) and said second direction is radially outwards from said manifold axially centered protrusion (54).

14. The method of claim 12 wherein the step of utilizing said magnetic field force to displace said locking member (60) in said second direction further comprises:
slideably removing said locking member extended protrusion (70) from said axially centered protrusion slot as a result of said magnetic field force overcoming said resilient biasing force of said resilient component (64).

15. The method of claim 12 further including reversing said filter cartridge (40) in a direction opposite the first direction to remove the magnetic field force upon removal and separation of the magnetic structure (44) of the filter cartridge from the magnetic structure (62) of the manifold, thus reintroducing the locking member (60).

## Patentansprüche

1. Filtersystem, das Folgendes umfasst:
einen Filterverteiler (14) mit Fluidein- und -auslassöffnungen (16a, 16b) und einer Fassung zur Aufnahme einer Filterpatrone, wobei der Filterverteiler einen beweglichen Sperrmechanismus (19) mit einer ersten Magnetstruktur (114) darin oder daran befestigt einschließt wobei der Sperrmechanismus das Anbringen der Filterpatrone an dem Verteiler verhindert und in Axialrichtung (118) beweglich ist, wenn eine komplementäre oder gepaarte Magnetstruktur (104) in einer zweiten Richtung (120), etwa lotrecht zur Axialrichtung, bewegt und in unmittelbarer Nähe zu der Magnetstruktur (114) positioniert wird, wobei die Magnetstrukturen jeweils einen korrelierten Magneten mit einer Vielzahl von Magnetfeldemissionsquellen einschließen, deren Positionen und Polaritäten sich auf eine vordefinierte räumliche Kraftfunktion beziehen, die einer vorbestimmten Ausrichtung der Magnetfeldemissionsquellen entspricht; und
die Filterpatrone (10), wobei die Filterpatrone Folgendes einschließt:
ein Gehäuse oder einen Sumpf mit einer Oberseite, einer axialen oder longitudinalen Länge und einem Innenhohlraum;
eine Einlassöffnung und eine Auslassöffnung in Fluidverbindung mit dem Innenhohlraum und den Fluidein- Verteilereinlass- und -auslassöffnungen (16a, 16b) des Verteilers, wenn die Filterpatrone mit dem Verteiler verbunden ist;
einen ringförmigen Kragen (22), der um den Umfang der Oberseite des Gehäuses befindlich ist und mit einem oberen Rand, einer Innenwand und einer Außenwand, wobei der ringförmige Kragen Folgendes einschließt:
Befestigungsansätze oder -gewinde (18), die sich von dem ringförmigen Kragen erstrecken; und
eine komplementäre oder gepaarte Magnetstruktur (104), die sich an oder in dem ringförmigen Kragen befindet, und mit einer radial nach außen weisenden Oberfläche, die sich mindestens nicht weiter als eine radiale Ausdehnung der Befestigungsansätze oder -gewinde (18) erstreckt;
wobei, nach dem Anbringen der Filterpatrone (10) am Filterverteiler (14), die Magnetstrukturen (104, 114) in unmittelbare Nähe zueinander gebracht werden, so dass die Magnetfeldkraft erzeugt wird, die den Sperrmechanismus in der Axialrichtung bewegt, was ermöglicht, wodurch sich die Befestigungsansätze oder -gewinde weiter in der zweiten Richtung bewegen können, um das Anbringen der Filterpatrone am Filterverteiler zu vervollständigen.

2. Filtersystem nach Anspruch 1, wobei der ringförmige Kragen der Filterpatrone weiter eine Lasche (12) umfasst, mit einer radial nach außen weisenden Oberfläche und die sich in einer Axialrichtung in Bezug auf den ringförmigen Kragen oberhalb der Oberseite des Gehäuses erstreckt, wobei die komplementäre oder gepaarte Magnetstruktur (104) an oder in der Lasche angeordnet ist, und wahlweise, wobei sich die Lasche (12) in der Axialrichtung vom oberen Rand des ringförmigen Kragens erstreckt und/oder sich die radial nach außen weisende Oberfläche der Lasche (12) nicht weiter als die Außenwand des ringförmigen Kragens erstreckt.

3. Filtersystem nach Anspruch 1, wobei die Magnetfeldemissionsquellen der Magnetstruktur (114) des Filterverteilers in einer vorbestimmten Weise ausgebildet sind, um eine magnetische Scherkraft zu erzeugen, wenn sie in unmittelbare Nähe der Magnetstruktur (104) der Filterpatrone gebracht werden.

4. Filtrationssystem nach Anspruch 1, wobei die Filterpatrone (10) drehbar von dem Filterverteiler (14) aufgenommen ist.

5. Verfahren zum Verbinden einer Filterpatrone mit einem aufnehmenden Verteiler, umfassend:
Einführen der Filterpatrone (10), umfassend ein Gehäuse oder einen Sumpf mit einem Innenhohlraum mit Filtermedium und einer Oberseite des Gehäuses, eine Einlass- und eine Auslassöffnung, jeweils in Fluidverbindung mit dem Innenhohlraum und dem Filtermedium, einen ringförmigen Kragen (22), der um den Umfang der Oberseite des Gehäuses angeordnet ist und mit einem oberen Rand, einer Innenwand und einer Außenwand, wobei der ringförmige Kragen Befestigungsansätze oder -gewinde (18), die sich von dem ringförmigen Kragen erstrecken, und eine Magnetstruktur (104) auf oder innerhalb dem ringförmigen Kragen (22) befindlich, einschließt, wobei die Magnetstruktur einen korrelierten Magneten mit einer Vielzahl von Magnetfeldemissionsquellen einschließt, deren Positionen und Polaritäten sich auf eine vordefinierte räumliche Kraftfunktion entsprechend einer vorbestimmten Ausrichtung der Magnetfeldemissionsquellen beziehen;
Einführen des aufnehmenden Verteilers (14), der zur Aufnahme der Filterpatrone konfiguriert ist, wobei der Verteiler einen Sperrmechanismus (19) umfasst, der das Anbringen der Filterpatrone an dem aufnehmenden Verteiler verhindert und mit einer Magnetstruktur (114) darin, wobei sich der Sperrmechanismus in Reaktion auf eine Magnetfeldkraft beweglich ist, die erzeugt wird, wenn eine komplementäre oder gepaarte Magnetstruktur (104) der Filterpatrone in unmittelbarer Nähe dazu positioniert wird, wobei die Magnetstrukturen (104, 114) jeweils einen korrelierten Magneten mit einer Vielzahl von Magnetfeldemissionsquellen einschließen, deren Positionen und Polaritäten sich auf eine vordefinierte räumliche Kraftfunktion entsprechend einer vorbestimmten Ausrichtung der Magnetfeldemissionsquellen beziehen;
Einsetzen der Filterpatrone in einen Aufnahmeabschnitt des Verteilers;
Bewegen der Filterpatrone und des Verteilers in unmittelbare Nähe zueinander durch Bewegen derselben näher zueinander in einer ersten Richtung (120) derart, dass die Magnetstruktur (104) der Filterpatrone und die Magnetstruktur (114) des aufnehmenden Verteilers in unmittelbarer Nähe platziert werden, wodurch die Magnetfeldkraft in einer Axialrichtung (118), annähernd lotrecht zur ersten Richtung (120), erzeugt wird; und
Benutzen der Magnetfeldkraft zum Verschieben des Sperrmechanismus (19).

6. Verfahren nach Anspruch 5, einschließlich des Umdrehens der Filterpatrone (10) in eine der ersten Richtung (120) entgegengesetzte Richtung, um die Magnetfeldkraft nach dem Entfernen und Trennen der Magnetstruktur (104) der Filterpatrone von der Magnetstruktur (114) des aufnehmenden Verteilers zu beseitigen, was folglich den Sperrmechanismus (19) wieder einführt.

7. Verfahren nach Anspruch 5, weiter einschließlich des Weiterbewegens der Filterpatrone (10) in der ersten Richtung (120), bis die Filterpatrone vollständig in dem aufnehmenden Verteiler (14) installiert ist.

8. Filtersystem, das Folgendes umfasst:
eine Filterpatrone (40), die Folgendes umfasst:
ein Gehäuse oder einen Sumpf mit einem Innenhohlraum mit Filtermedium und einer Oberseite des Gehäuses;
einen axial zentrierten Schaft (42), der sich von der Oberseite erstreckt, mit einer Ein- und Auslassöffnung in Fluidverbindung mit dem Innenhohlraum-Filtermedium;
Befestigungsansätze (48), die auf der Oberseite des Gehäuses angeordnet sind oder sich von derselben erstrecken; und
eine Magnetstruktur (44), die auf oder in unmittelbarer Nähe der Oberseite befindlich ist, wobei die Magnetstruktur einen ersten korrelierten Magneten umfasst; und
einen Filterverteiler (50), der zur Aufnahme der Filterpatrone (40) konfiguriert ist, wobei der Filterverteiler Folgendes umfasst:
ein Verteilergehäuse mit einer Oberseite des Verteilergehäuses, einer Aufnahmefassung zur Aufnahme der Filterpatrone (40), und das einen axial zentrierten Vorsprung (54) umfasst, mit einem Schlitz oder einer Fassung, der/die sich von der Oberseite des Verteilergehäuses erstreckt;
gegenüberliegende bogenförmige Schlitze (53) durch die Oberseite des Verteilergehäuses, wobei jeder bogenförmige Schlitz an einem Ende eine größere Öffnung zur Aufnahme der Befestigungsansätze (48) der Filterpatrone (40) aufweist;
eine Verriegelungselement-Rückhaltestruktur oder -Halterung (52), die sich radial nach außen von dem axial mittigen Vorsprung (54) erstreckt;
ein Verriegelungselement (60) mit einer Unterseite und eines verlängerten Vorsprungs (70) an einem Ende, wobei das Verriegelungselement in die Verriegelungselement-Rückhaltestruktur oder -Halterung (52) einsetzbar ist und mit derselben in verschiebbarer Verbindung steht, wobei das Verriegelungselement an einem dem verlängerten Vorsprung (70) gegenüberliegenden Ende eine elastische Komponente (64) umfasst, um eine elastische Kraft gegen das Verriegelungselement bereitzustellen, die das Verriegelungselement radial nach innen zu dem Schlitz des axial zentrierten Vorsprungs hin drückt; und
einen komplementären oder gepaarten korrelierten Magnet (62), der sich auf der Unterseite des Verriegelungselements (60) befindet.

9. Filtersystem nach Anspruch 8, weiter einschließlich einer Ventilanordnung (72) mit einer Basis, die von dem axial zentrierten Vorsprung (54) aufgenommen wird, und wahlweise, wobei die Ventilanordnung (72) Einlass- und Auslassöffnungen (74a, 74b) und eine Kerbe (76) in der Basis einschließt, wobei die Kerbe dafür konfiguriert ist, über der Verriegelungselement-Rückhaltung (52) platziert zu werden, wenn sich die Ventilanordnung auf dem axial zentrierten Vorsprung (54) befindet.

10. Filtersystem nach Anspruch 8, wobei der verlängerte Verriegelungselementvorsprung (70) durch eine Magnetfeldkraft und gegen eine elastische axial nach innen gerichtete Kraft der elastischen Komponente (64) aus dem Schlitz verschiebbar entfernt wird, wenn die Filterpatrone (40) mit dem Filterverteiler (50) eingesetzt wird, was ermöglicht, dass sich die Filterpatrone in Bezug auf das Gehäuse des Verteilers dreht.

11. Filtersystem nach Anspruch 8, wobei der korrelierte Magnet der Filterpatrone Magnetfeldemissionsquellen einschließt, die in einer vorbestimmten Weise ausgebildet sind, um eine magnetische Scherkraft zu erzeugen, wenn sie in unmittelbare Nähe des korrelierten Magneten des Filterverteilers gebracht werden.

12. Verfahren zum Verbinden einer Filterpatrone mit einem aufnehmenden Verteiler, umfassend:
Einführen der Filterpatrone (40), umfassend ein Gehäuse oder einen Sumpf mit einem Innenhohlraum mit Filtermedium darin und einer Oberseite des Gehäuses, einem axial zentrierten Schaft (42), der sich von der Oberseite erstreckt, und mit einer Einlass- und Auslassöffnung in Fluidverbindung mit dem Innenhohlraum, Befestigungsansätze (48), die auf dem Gehäuse angeordnet sind oder sich von demselben erstrecken, und eine Magnetstruktur (44), die sich auf oder in unmittelbarer Nähe der Oberseite befindlich ist, wobei die Magnetstruktur einen korrelierten Magneten mit einer Vielzahl von Magnetfeldemissionsquellen einschließt, deren Positionen und Polaritäten sich auf eine vordefinierte räumliche Kraftfunktion entsprechend einer vorbestimmten Ausrichtung der Magnetfeldemissionsquellen beziehen;
Einführen des aufnehmenden Verteilers (50), der zur Aufnahme der Filterpatrone (40) konfiguriert ist, wobei der Verteiler einen axial zentrierten Vorsprung (54), der sich axial von der Oberseite erstreckt und mit einem Schlitz oder einer Öffnung darin, gegenüberliegende bogenförmige Schlitze (53) durch eine Oberseite des Verteilers, wobei jeder bogenförmige Schlitz an einem Ende eine größere Öffnung zur Aufnahme der Befestigungsansätze (48) der Filterpatrone (40) aufweist, eine Verriegelungselement-Rückhaltestruktur oder -Halterung (52), die sich radial nach außen von dem axial zentrierten Vorsprung erstreckt, ein Verriegelungselement (60) mit einer Unterseite und einem verlängerten Vorsprung (70), wobei das Verriegelungselement an einem dem verlängerten Vorsprung (70) gegenüberliegenden Ende ein elastisches Element (64) einschließt, um eine elastische Kraft gegen das Verriegelungselement bereitzustellen, die das Verriegelungselement radial nach innen zu dem Schlitz des axial zentrierten Vorsprungs (54) hin drückt, wobei das Verriegelungselement in die Verriegelungselement-Rückhaltestruktur oder -Halterung (52) einsetzbar ist und mit derselben in verschiebbarer Verbindung steht, und einen komplementären oder gepaarten korrelierten Magnet (62), der sich auf oder innerhalb der Unterseite des Verriegelungselements befindet, umfasst;
Einsetzen der Filterpatrone (40) in einen Aufnahmeabschnitt des Verteilers (50) durch Aufnehmen der gegenüberliegenden Befestigungsansätze (48) der Filterpatrone in den bogenförmigen Schlitzen (53);
Bewegen der Filterpatrone (40) und des Verteilers (50) in unmittelbare Nähe zueinander durch Bewegen derselben näher zueinander in einer ersten Richtung derart, dass die Magnetstrukturen (44, 62) der Filterpatrone und des Verteilers in unmittelbarer Nähe platziert werden, wodurch eine Magnetfeldkraft zwischen denselben in einer zweiten Richtung, lotrecht zur ersten Richtung, erzeugt wird;
Benutzen der Magnetfeldkraft, um das Verriegelungselement (60) in der zweiten Richtung zu verschieben; und
Weiterbewegen der Filterpatrone (40) in der ersten Richtung, bis die Filterpatrone vollständig im Verteiler (50) installiert ist.

13. Verfahren nach Anspruch 12, wobei die erste Richtung eine Drehrichtung um den axial zentrierten Verteilervorsprung (54) ist und die zweite Richtung radial nach außen von dem axial zentrierten Verteilervorsprung (54) ist.

14. Verfahren nach Anspruch 12, wobei der Schritt des Benutzens der Magnetfeldkraft, um das Verriegelungselement (60) in der zweiten Richtung zu verschieben, weiter Folgendes umfasst:
verschiebbares Entfernen des verlängerten Verriegelungselementvorsprungs (70) aus dem axial zentrierten Vorsprungsschlitz im Ergebnis dessen, dass die Magnetfeldkraft die elastische Vorspannkraft der elastischen Komponente (64) überwindet.

15. Verfahren nach Anspruch 12, weiter einschließlich des Umdrehens der Filterpatrone (40) in eine der ersten Richtung entgegengesetzte Richtung, um die Magnetfeldkraft nach dem Entfernen und Trennen der Magnetstruktur (44) der Filterpatrone von der Magnetstruktur (62) des Verteilers zu beseitigen, was folglich das Verriegelungselement (60) wieder einführt.

## Revendications

1. Système de filtration comprenant :
un collecteur de filtre (14) présentant des orifices d'entrée et de sortie de fluide (16a, 16b) et une ouverture destinée à recevoir une cartouche filtrante, ledit collecteur de filtre incluant un mécanisme de blocage mobile (19) présentant une structure magnétique (114) intégrée ou fixée à celui-ci, ledit mécanisme de blocage empêchant la fixation de ladite cartouche filtrante audit collecteur et se déplaçant dans une direction axiale (118) en réponse à une force de champ magnétique générée lorsqu'une structure magnétique complémentaire ou appariée (104) est déplacée dans une seconde direction (120) approximativement perpendiculaire à ladite direction axiale et positionnée à proximité étroite de ladite structure magnétique (114), lesdites structures magnétiques incluant chacune un aimant corrélé présentant une pluralité de sources d'émission de champ magnétique dont les positions et les polarités sont liées à une fonction de force spatiale prédéfinie qui correspond à un alignement prédéterminé desdites sources d'émission de champ magnétique ; et
ladite cartouche filtrante (10), ladite cartouche filtrante incluant :
un boîtier ou un puisard présentant une surface supérieure, une longueur axiale ou longitudinale et une cavité interne ;
un orifice d'entrée et un orifice de sortie en communication fluidique avec ladite cavité interne et lesdits orifices d'entrée et de sortie de fluide de collecteur (16a, 16b) lorsque ladite cartouche filtrante est connectée audit collecteur ;
un collier annulaire (22) situé circonférentiellement autour de ladite surface supérieure de boîtier, et présentant un rebord supérieur, une paroi intérieure et une paroi extérieure, ledit collier annulaire incluant :
des pattes ou filetages de fixation (18) s'étendant à partir dudit collier annulaire ; et
une structure magnétique complémentaire ou appariée (104) située sur ou à l'intérieur dudit collier annulaire et présentant une surface orientée radialement vers l'extérieur qui ne s'étend au moins pas au-delà d'une extension radiale desdites pattes ou desdits filetages de fixation (18) ;
dans lequel, lors de la fixation de ladite cartouche filtrante (10) audit collecteur de filtre (14), lesdites structures magnétiques (104, 114) sont amenées à proximité étroite l'une de l'autre de telle sorte que ladite force de champ magnétique est générée, ce qui déplace ledit mécanisme de blocage dans ladite direction axiale, permettant auxdites pattes ou filetages de fixation de continuer à se déplacer dans ladite seconde direction pour achever la fixation de ladite cartouche filtrante audit collecteur de filtre.

2. Système de filtration selon la revendication 1, dans lequel ledit collier annulaire de cartouche filtrante comprend en outre une languette (12) présentant une surface orientée radialement vers l'extérieur et s'étendant dans une direction axiale par rapport au collier annulaire au-dessus de ladite surface supérieure de boîtier, ladite structure magnétique complémentaire ou appariée (104) étant située sur ou à l'intérieur de ladite languette et, facultativement, dans lequel ladite languette (12) s'étend dans la direction axiale à partir du bord supérieur dudit collier annulaire et/ou la surface orientée radialement vers l'extérieur de ladite languette (12) ne s'étend pas plus loin que la paroi extérieure dudit collier annulaire.

3. Système de filtration selon la revendication 1, dans lequel lesdites sources d'émission de champ magnétique de ladite structure magnétique (114) dudit collecteur de filtre sont formées d'une manière prédéterminée pour fournir une force de cisaillement magnétique lorsqu'elles sont amenées à proximité étroite de ladite structure magnétique (104) de ladite cartouche filtrante.

4. Système de filtration selon la revendication 1, dans lequel ladite cartouche filtrante (10) est reçue de manière rotative par ledit collecteur de filtre (14).

5. Procédé d'interconnexion d'une cartouche filtrante à un collecteur de réception comprenant :
l'introduction de ladite cartouche filtrante (10) comprenant un boîtier ou un puisard présentant une cavité interne avec un milieu filtrant et une surface supérieure de boîtier, un orifice d'entrée et un orifice de sortie chacun en communication fluidique avec ladite cavité interne et le milieu filtrant, un collier annulaire (22) situé circonférentiellement autour de ladite surface supérieure de boîtier et présentant un rebord supérieur, une paroi intérieure et une paroi extérieure, ledit collier annulaire incluant des pattes ou des filetages de fixation (18) s'étendant à partir dudit collier annulaire, et une structure magnétique (104) située sur ou à l'intérieur dudit collier annulaire (22), dans lequel ladite structure magnétique inclut un aimant corrélé présentant une pluralité de sources d'émission de champ magnétique présentant des positions et des polarités liées à une fonction de force spatiale prédéfinie qui correspond à un alignement prédéterminé desdites sources d'émission de champ magnétique ;
l'introduction dudit collecteur de réception (14) configuré pour recevoir ladite cartouche filtrante, le collecteur comprenant un mécanisme de blocage (19) empêchant la fixation de ladite cartouche filtrante audit collecteur de réception et présentant une structure magnétique (114) intégrée à celui-ci, ledit mécanisme de blocage étant mobile en réponse à une force de champ magnétique générée lorsqu'une structure magnétique complémentaire ou appariée (104) de ladite cartouche filtrante est positionnée à proximité étroite de celui-ci, lesdites structures magnétiques (104, 114) incluant chacune un aimant corrélé présentant une pluralité de sources d'émission de champ magnétique présentant des positions et des polarités liées à une fonction de force spatiale prédéfinie qui correspond à un alignement prédéterminé desdites sources d'émission de champ magnétique ;
l'insertion de ladite cartouche filtrante dans une partie de réception dudit collecteur ;
le déplacement de ladite cartouche filtrante et dudit collecteur à proximité étroite l'un de l'autre en les rapprochant dans une première direction (120), de sorte que la structure magnétique (104) de la cartouche filtrante et la structure magnétique (114) du collecteur de réception soient placées à proximité étroite l'une de l'autre, générant ladite force de champ magnétique dans une direction axiale (118) approximativement perpendiculaire à la première direction (120) ; et
l'utilisation de ladite force de champ magnétique pour déplacer ledit mécanisme de blocage (19).

6. Procédé selon la revendication 5 incluant l'inversion de ladite cartouche filtrante (10) dans une direction opposée à la première direction (120) pour supprimer la force de champ magnétique lors du retrait et de la séparation de la structure magnétique (104) de la cartouche filtrante à partir de la structure magnétique (114) du collecteur de réception, réintroduisant ainsi le mécanisme de blocage (19).

7. Procédé selon la revendication 5 incluant en outre la poursuite du déplacement de ladite cartouche filtrante (10) dans ladite première direction (120) jusqu'à ce que ladite cartouche filtrante soit complètement installée dans ledit collecteur de réception (14).

8. Système de filtration comprenant :
une cartouche filtrante (40) comprenant :
un boîtier ou un puisard présentant une cavité interne avec un milieu filtrant et une surface supérieure de boîtier ;
une tige centrée axialement (42) s'étendant à partir de ladite surface supérieure présentant un orifice d'entrée et de sortie en communication fluidique avec ledit milieu filtrant de cavité interne ;
des pattes de fixation (48) positionnées sur ou s'étendant à partir de ladite surface supérieure de boîtier ; et
une structure magnétique (44) située sur ou à proximité étroite de ladite surface supérieure, dans lequel ladite structure magnétique inclut un premier aimant corrélé ; et
un collecteur de filtre (50) configuré pour recevoir ladite cartouche filtrante (40), ledit collecteur de filtre comprenant :
un boîtier de collecteur présentant une surface supérieure de boîtier collecteur, une ouverture de réception pour recevoir ladite cartouche filtrante (40), et incluant une protubérance centrée axialement (54) présentant une fente ou ouverture s'étendant à partir de ladite surface supérieure de boîtier collecteur ;
des fentes arquées opposées (53) à travers ladite surface supérieure de boîtier collecteur, chaque fente arquée présentant une ouverture plus grande à une extrémité pour recevoir lesdites pattes de fixation (48) de ladite cartouche filtrante (40) ;
une structure ou un support de retenue d'élément de verrouillage (52) s'étendant radialement vers l'extérieur à partir de ladite protubérance centrée axialement (54) ;
un élément de verrouillage (60) présentant une surface inférieure et une protubérance étendue (70) à une extrémité, ledit élément de verrouillage pouvant être inséré dans, et en communication par glissement avec, ladite structure ou ledit support de retenue d'élément de verrouillage (52), ledit élément de verrouillage incluant un composant élastique (64) à une extrémité opposée à ladite protubérance étendue (70) pour fournir une force élastique contre ledit élément de verrouillage, poussant ledit élément de verrouillage radialement vers l'intérieur vers ladite fente de ladite protubérance centrée axialement ; et
un aimant corrélé complémentaire ou apparié (62) situé sur ladite surface inférieure dudit élément de verrouillage (60).

9. Système de filtration selon la revendication 8 incluant en outre un ensemble vanne (72) présentant une base et reçu par ladite protubérance centrée axialement (54) et, facultativement, dans lequel ledit ensemble vanne (72) inclut des orifices d'entrée et de sortie (74a, 74b) et une encoche (76) dans ladite base, ladite encoche étant configurée pour être placée sur ledit élément de verrouillage (52) lorsque ledit ensemble vanne est situé sur ladite protubérance centrée axialement (54).

10. Système de filtration selon la revendication 8, dans lequel ladite protubérance étendue d'élément de verrouillage (70) est retirée par glissement à partir de ladite fente par une force de champ magnétique, et contre une force élastique axiale vers l'intérieur dudit composant élastique (64), lorsque ladite cartouche filtrante (40) est insérée avec ledit collecteur de filtre (50), permettant à ladite cartouche filtrante de tourner par rapport audit boîtier de collecteur.

11. Système de filtration selon la revendication 8, dans lequel ledit aimant corrélé de ladite cartouche filtrante inclut des sources d'émission de champ magnétique formées d'une manière prédéterminée pour fournir une force de cisaillement magnétique lorsqu'elles sont amenées à proximité étroite dudit aimant corrélé dudit collecteur de filtre.

12. Procédé d'interconnexion d'une cartouche filtrante à un collecteur de réception comprenant :
l'introduction de ladite cartouche filtrante (40) comprenant un boîtier ou un puisard présentant une cavité interne avec un milieu filtrant à l'intérieur, et une surface supérieure, une tige centrée axialement (42) s'étendant à partir de ladite surface supérieure présentant un orifice d'entrée et de sortie en communication fluidique avec ladite cavité interne, des pattes de fixation (48) positionnées sur ou s'étendant à partir dudit boîtier, et une structure magnétique (44) située sur ou à proximité étroite de ladite surface supérieure, dans lequel ladite structure magnétique inclut un aimant corrélé présentant une pluralité de sources d'émission de champ magnétique présentant des positions et des polarités liées à une fonction de force spatiale prédéfinie qui correspond à un alignement prédéterminé desdites sources d'émission de champ magnétique ;
l'introduction dudit collecteur de réception (50) configuré pour recevoir ladite cartouche filtrante (40), ledit collecteur comprenant une protubérance centrée axialement (54) s'étendant axialement à partir de ladite surface supérieure présentant une fente ou une ouverture à l'intérieur, des fentes arquées opposées (53) à travers une surface supérieure dudit collecteur, chaque fente arquée présentant une ouverture plus large à une extrémité pour recevoir lesdites pattes de fixation (48) de ladite cartouche filtrante (40), une structure ou un support de retenue d'élément de verrouillage (52) s'étendant radialement vers l'extérieur à partir de ladite protubérance centrée axialement, un élément de verrouillage (60) présentant une surface inférieure et une protubérance étendue (70), ledit élément de verrouillage incluant un composant élastique (64) à une extrémité opposée à ladite protubérance étendue (70) pour fournir une force élastique contre ledit élément de verrouillage, poussant ledit élément de verrouillage radialement vers l'intérieur vers ladite fente de ladite protubérance centrée axialement (54), ledit élément de verrouillage pouvant être inséré à l'intérieur de, et en communication par glissement avec, ladite structure ou ledit support de retenue d'élément de verrouillage (52) ; et un aimant corrélé complémentaire ou apparié (62) situé sur ou à l'intérieur de ladite surface inférieure dudit élément de verrouillage ;
l'insertion de ladite cartouche filtrante (40) dans une partie de réception dudit collecteur (50) par réception desdites pattes de fixation opposées (48) de ladite cartouche filtrante dans lesdites fentes arquées (53) ;
le déplacement de ladite cartouche filtrante (40) et dudit collecteur (50) à proximité étroite l'un de l'autre en les rapprochant dans une première direction, de sorte que les structures magnétiques (44, 62) de la cartouche filtrante et du collecteur soient placées à proximité étroite, générant une force de champ magnétique entre elles dans une seconde direction perpendiculaire à la première direction ;
l'utilisation de ladite force de champ magnétique pour déplacer ledit élément de verrouillage (60) dans ladite seconde direction ; et
la poursuite du déplacement de ladite cartouche filtrante (40) dans ladite première direction jusqu'à ce que ladite cartouche filtrante soit complètement installée dans ledit collecteur (50).

13. Procédé selon la revendication 12 dans lequel ladite première direction est une direction de rotation autour de ladite protubérance centrée axialement (54) du collecteur et ladite seconde direction est radialement vers l'extérieur à partir de ladite protubérance centrée axialement (54) du collecteur.

14. Procédé selon la revendication 12, dans lequel l'étape d'utilisation de ladite force de champ magnétique pour déplacer ledit élément de verrouillage (60) dans ladite seconde direction comprend en outre :
le retrait par glissement de ladite protubérance étendue d'élément de verrouillage (70) à partir de ladite fente de protubérance centrée axialement suite au fait que ladite force de champ magnétique surmonte ladite force de polarisation élastique dudit composant élastique (64).

15. Procédé selon la revendication 12 incluant en outre l'inversion de ladite cartouche filtrante (40) dans une direction opposée à la première direction afin de supprimer la force de champ magnétique lors du retrait et de la séparation de la structure magnétique (44) de la cartouche filtrante à partir de la structure magnétique (62) du collecteur, réintroduisant ainsi l'élément de verrouillage (60).
